# EUROPEAN PATENT APPLICATION

(11) **EP 1 939 464 A2**
(43) Date of publication of application: **02.07.2008**
(21) Application number: 07380368.6
(22) Date of filing: 20.12.2007
(51) Int. Cl.: F16B 23/00, F16B 35/06

(54) **A dynamometric screw with antiflexure fusible head**

(30) Priority: 29.12.2006 ES 200603307
(71) Applicant: Ridelin, S.L., 08240 Manresa (Barcelona) (ES)
(72) Inventor: Capelles de la Fuente, Rosa c/o Ridelin S.L., 08240 Manresa (Barcelona) (ES)
(74) Representative: Aragones Forner, Rafael Angel

(57) **Abstract**

The hexagonal head (3) has an essentially spherical configuration being truncated at the mutually opposite cutoff planes (a,b) along the axial centreline (e) of the body of the screw (1), said hexagonal head (3) consisting in a succession of curved faces (5) by way of spherical lunes, said faces being flat when considered in an orthogonal direction with respect to the axial centreline (e) and curved when considered in a longitudinal direction with respect to said centreline (e) between the two meridians (6) delimiting them, said faces having their biggest width in correspondence with the middle plane, their width becoming smaller towards the cutoff planes (a,b), each meridian (6) making up the common curved edge between each pair of the aforementioned faces.

## Description

### OBJECT OF THE INVENTION

The present invention relates to a dynamometric screw with antiflexure fusible head.

### FIELD OF THE INVENTION

In the electric connectors for carrying out connections, branchings, splicings, etc. special screws are occasionally required which are of the type of the dynamometric screws with antiflexure fusible head.

This type of screws with antiflexure head allow to obviate the problem of the flexural failure when applying a clamping torque on the head of a hexagonal-head screw.

### BACKGROUND OF THE INVENTION

The dynamometric screws being used so far and provided with a hexagonal head have the problem of the flexural failure, this being a serious drawback.

### SUMMARY OF THE INVENTION

In order to obviate the aforementioned drawbacks regarding the flexural failure episodes the present invention provides a dynamometric screw with antiflexure head of the type comprising at the front end a threaded portion, at the opposite end the hexagonal head, and at the middle portion a necked-down portion corresponding to a preset rupture torque, said dynamometric screw being essentially characterised in that the hexagonal head has an essentially spherical configuration being truncated at the mutually opposite cutoff planes along the axial centreline of the body of the screw, said hexagonal head consisting in a succession of curved faces by way of spherical lunes, said faces being flat when considered in an orthogonal direction with respect to the axial centreline between the two cutoff planes and curved when considered in a longitudinal direction with respect to said centreline between the two meridians delimiting them, said faces having their biggest width in correspondence with the middle plane being related to the equator, their width becoming smaller towards the cutoff planes, each meridian making up the common curved edge between each pair of the aforementioned faces.

According to the invention said hexagonal head with curved faces makes up an antiflexure head being adapted to be driven with a hexagonal wrench of the so-called socket wrench type preventing the flexural failure when applying a clamping torque on the head.

These and other characterising features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In said drawings:
Fig. 1 is a front elevational view from I of the screw of the invention.
Fig. 2 is a front elevational view as considered at 90° from II of the screw.
Fig. 3 is a plan-view of the screw.
Fig. 4 is an elevational view showing the screw having fitted to its head the socket-type wrench in order to thus proceed to apply the corresponding clamping torque.

### DESCRIPTION OF A PREFERRED EMBODIMENT

According to the drawings the dynamometric screw with antiflexure fusible head being generally designated at -1-comprises at the front end a threaded portion -2-, at the opposite end the hexagonal head -3-, and at the middle portion a necked-down portion -4- corresponding to a preset rupture torque.

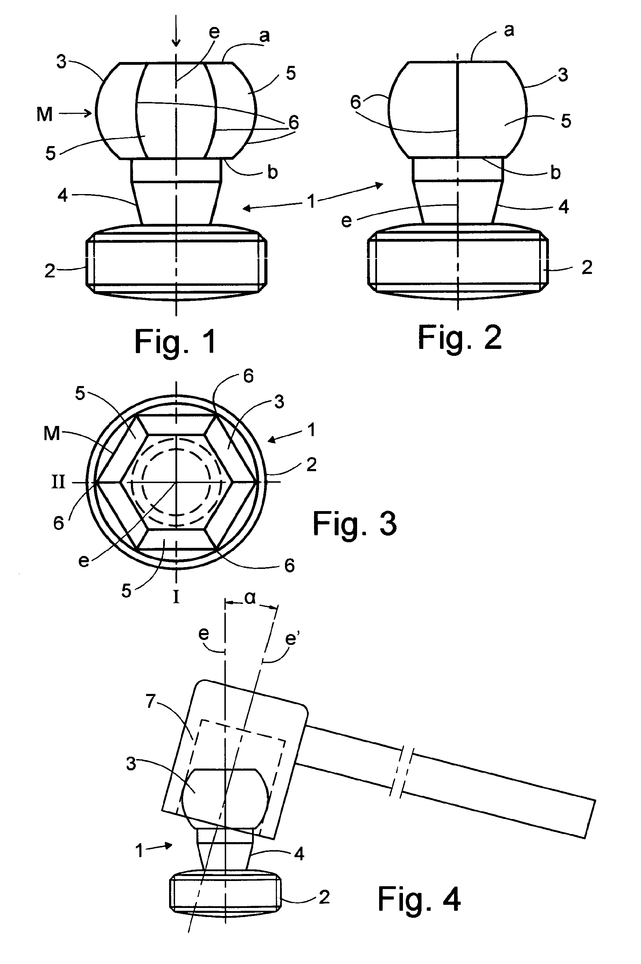

The hexagonal head -3- of the screw of the invention has an essentially spherical configuration being truncated at the mutually opposite cutoff planes -a-, -b- along the axial centreline -e- of the body of the screw, said hexagonal head consisting in a succession of curved faces - 5- by way of spherical lunes, said faces being flat when considered in an orthogonal direction with respect to the axial centreline -e- between the two cutoff planes -a- and -b- and curved when considered in a longitudinal direction with respect to said centreline -e- between the two meridians -6- delimiting them, said faces having their biggest width in correspondence with the middle plane -M-being related to the equator and corresponding to the plane of Fig. 3, their width becoming smaller towards the cutoff planes -a- and -b-. As can be seen in the figures, each meridian -6- makes up the common curved edge between each pair of the aforementioned adjacent faces.

The aforementioned hexagonal head -3- with curved faces -5- makes up an antiflexure head, this latter as shown in Fig. 4 being adapted to be driven with a hexagonal wrench -7- of the so-called socket wrench type being fixed at the end of a handle -8-.

In operation the aforementioned antiflexure head arrangement assures the breakage of the fusible head at a preset clamping torque at the rupture cross-section in a tangential manner as related to the force application point, the possible components of the clamping torque being thus eliminated.

The centreline -e'- of the socket wrench forms an angle α with the axial centreline -e- of the screw -1-, the aforementioned failure being thus precluded.

The middle portion being provided with the necked-down portion can of course have any desired configuration such as that being illustrated here and comprising a cylindrical portion next to the head -3- and a frustoconical portion being adjacent to the threaded portion -2- and together with said threaded portion forming the aforementioned necked-down portion, or else it can have for example one only frustoconical portion whose end having the smaller cross-section will make up the necked-down portion.

## Claims

1. A dynamometric screw with antiflexure fusible head of the type comprising at the front end a threaded portion, at the opposite end the hexagonal head, and at the middle portion a necked-down portion corresponding to a preset rupture torque; **characterised in that** the hexagonal head (3) has an essentially spherical configuration being truncated at the mutually opposite cutoff planes (a, b) along the axial centreline (e) of the body of the screw (1), said hexagonal head consisting in a succession of curved faces (5) by way of spherical lunes, said faces being flat when considered in an orthogonal direction with respect to the axial centreline (e) between the two cutoff planes and curved when considered in a longitudinal direction with respect to said centreline (e) between the two meridians (6) delimiting them, said faces having their biggest width in correspondence with the middle plane being related to the equator, their width becoming smaller towards the cutoff planes, each meridian (6) making up the common curved edge between each pair of the aforementioned faces.

2. A screw as per claim 1, **characterised in that** said hexagonal head (3) with curved faces makes up an antiflexure head being adapted to be driven with a hexagonal wrench (7) of the so-called socket wrench type preventing the flexural failure when applying a clamping torque on the head.
